# EUROPEAN PATENT SPECIFICATION

(11) **EP 0 749 909 B1**
(45) Date of publication and mention of the grant of the patent: **19.03.2003**
(21) Application number: 96109967.8
(22) Date of filing: 20.06.1996
(51) Int. Cl.: B65D 47/34, B05B 11/00

(54) **Dispensing device for lotions and like**
Ausgabevorrichtung für Lotions und ähnliches
Distributeur pour lotions et analogue

(30) Priority: 22.06.1995 US 493837
(43) Date of publication of application: 27.12.1996
(73) Proprietor: Owens-Brockway Plastic Products Inc., Toledo, OH 43666 (US)
(72) Inventor: Smith, Roger P., Exeter, NH 03833 (US); Gearhart, Kent A., Perrysburg, OH 43551 (US); Bliss III, Earnest E., Perrysburg, OH 43551 (US)
(74) Representative: Blumbach, Kramer & Partner GbR

(56) References cited:
- EP-A- 0 497 709
- EP-A- 0 582 517
- EP-A- 0 622 311
- DE-A- 2 710 984
- FR-A- 2 646 408
- FR-A- 2 669 306
- FR-A- 2 685 224
- US-A- 4 434 915

## Description

This invention relates to a dispensing device utilized for containing and dispensing viscous products such as personal care products which are filled in containers made up of flexible tubes.

In EP-A-0 677 374 (prior art in sense of Article 54(3) EPC) a method is disclosed of making a flexible plastic tube which comprises injection molding a finish having an opening, extruding a tube integrally with the finish by relative movement of the finish with respect to an extruder orifice while continuing continuously extruding the tube, closing a blow mold about the extruded tube, blowing the tube into an integral container body having a closed bottom, opening the mold to provide an integral flexible tube with a finish thereon. Thereafter the body is decorated with indica, the closed end of the tube is cut leaving an open-ended tube at the end opposite the finish, and a closure is applied to the finish. Subsequently, the tube is filled through the open end and the open end is sealed.

FR-A-2,646,408, Fig. 2 shows a dispensing device with the features of the preamble of claim 1. The container may be of PET and is welded onto the outer periphery of the dispenser flange. Welding the PET container onto the outer periphery of the dispenser flange means impairing the outer wall of the container registering to the dispenser flange.

FR-A-2,646,408, Fig. 3 shows a dispensing device according to the preamble of claim 2, that is with a double walled container. The finish includes a cup-shaped member which is hot crimped beneath the dispenser flange.

FR-A-2,646,408, Fig. 4 shows a further embodiment in which the axial body of the pump dispenses is integrally formed with the container finish, and the plunger is held thereon by means of a cap which is sealed by ultrasonic welding to a lip of the finish.

A further dispensing device known from US-A-4,434,915 includes a non-cylindrical container and a pump attached thereto. There is no indication that a flexible plastic tube could be used as a container. The container has a finish wall extending axially with a narrow radial end surface engaged by a gasket and the flange of the pump dispenser. A closure guide member is provided for attaching the pump dispenser on the container, pressing the flange rim and the gasket onto the narrow radial end surface of the container. No radial wall of the container is provided for centering the axial dispenser body.

EP-A-0,582,517 shows a dispensing device having a container with an outer and an inner flexible tube. The pump has a flange which is clamped in a groove between a pair of beads. Further double-walled containers with pump dispensers are shown in EP-A-0,622,311, FR-A-2,685,224 and 2,669 306, and DE-A-27 10 984. In all these examples, the outer wall is relatively stiff, compared to the inner wall.

The problem to be solved by the present invention is to fix the pump dispenser onto a container without impairing the outer wall of the container.

Such containers that comprise a flexible tube of plastics and a rigid finish can be produced with use of the method described in EP-A-0 677 374. The pump dispenser is to be assembled through the lower open end of the tube or on and through the container finish from above. The pump actuator can be made with a different color from the tube.

The invention is defined in claims 1 and 2.

In accordance with the invention, the flexible tube with an integral finish includes a transverse wall having an opening for receiving the body of a pump dispenser. In one form the pump dispenser is inserted in the tube through the open end of the tube before the tube is filled and a flange on the pump dispenser is attached to the underside of the transverse wall of the finish, preferably by welding as by ultrasonic welding or spin welding.

### Description of the Drawings

- FIG. 1: is a fragmentary exploded view of a package comprising a flexible tube and a pump dispenser.
- FIG. 2: is a fragmentary vertical sectional view of the upper end of the package.
- FIG. 3: is a fragmentary vertical sectional view of the upper end of the flexible tube.
- FIG. 4: is a sectional view taken along the line 4-4 in FIG. 3.
- FIG. 5: is an elevational view of the pump dispenser before it is applied to the flexible tube.
- FIG. 6: is a fragmentary vertical sectional view of an apparatus for assembling the flexible tube and pump dispenser shown in FIGS. 1 to 5.
- FIG. 7: is a fragmentary vertical sectional view showing a modified form.

### Description of the Preferred Embodiments

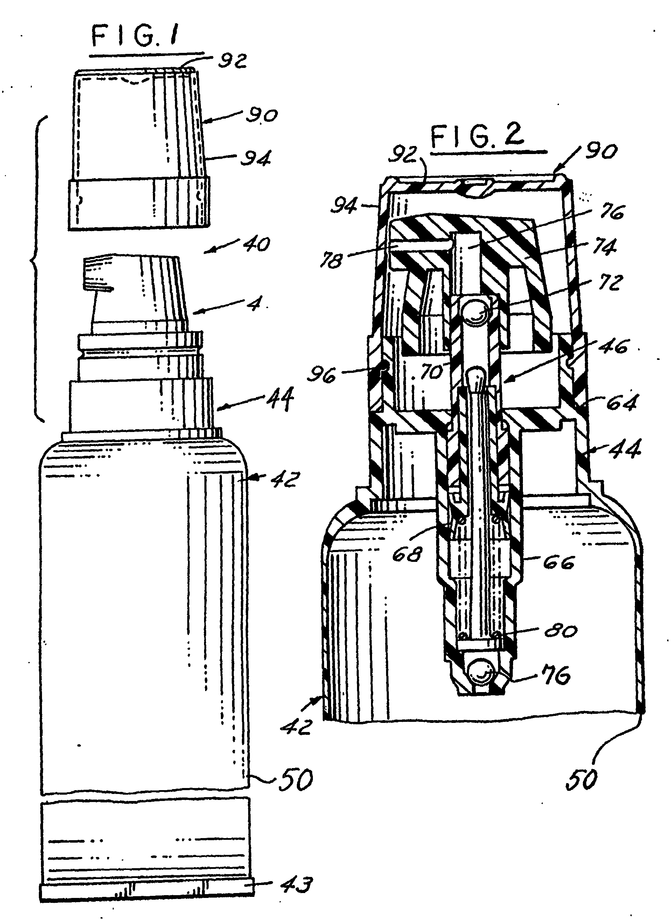

Referring to FIGS. 1 and 2, the flexible tube and pump dispenser package or dispensing device 40 embodying the invention comprises a flexible tube 42 having an integral finish 44 and a pump dispenser 46 attached to the finish 44. The flexible tube 42 is produced by a succession of steps described in EP-A-0,677,374. The container is preferably made of linear low density polyethylene. A preferred composition is linear low density polyethylene having a dispersion index of 5. However, high density polyethylene and low density polyethylene may be used.

The first step comprises making an interim hollow plastic container by a method and apparatus wherein the neck or finish 44 of the container is first injection molded, then a tube is extruded integrally with the injection molded finish, molds are closed about the tube and the tube is blown to form the container. Such a method and apparatus is shown in US-A-2,174,987 and 2,911,673.

The container comprises the injection mold finish 44, the extruded side wall or body 50 which is sufficiently thin so that it is flexible, and an integral bottom wall which is thicker and relatively rigid to allow for driving the tube to rotate the tube in the capping and decorating operations. The wall 50 is preferably of substantially constant thickness, for example 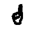 0.152 mm (0.006 inches).

The hollow blown interim container is then applied with indicia or decoration in one or more colors and designs.

The bottom of the interim container is then cut off leaving an open-ended tube. The pump dispenser 46 is attached to the tube and delivered to a customer. The purchaser of the open-ended tube fills the tube with viscous product through the open end and then seals the open end.

The invention has to do with providing the flexible tube with the pump dispenser, that is, attaching the pump dispenser 46 to the finish 44.

The finish 44 includes a transverse radial wall 54 having enlarged opening 56 for receiving a stem 70 of the pump dispenser 46 as presently described. The finish 44 further includes an integral annular wall 58 that extends axially from the radial wall 54, for reasons presently described. The annular wall 58 includes an annular inwardly tapered outer surface 60 at its upper end, and an annular groove 62 intermediate its upper end and transverse wall 54. An outwardly extending shoulder 64 is also provided on the finish 44.

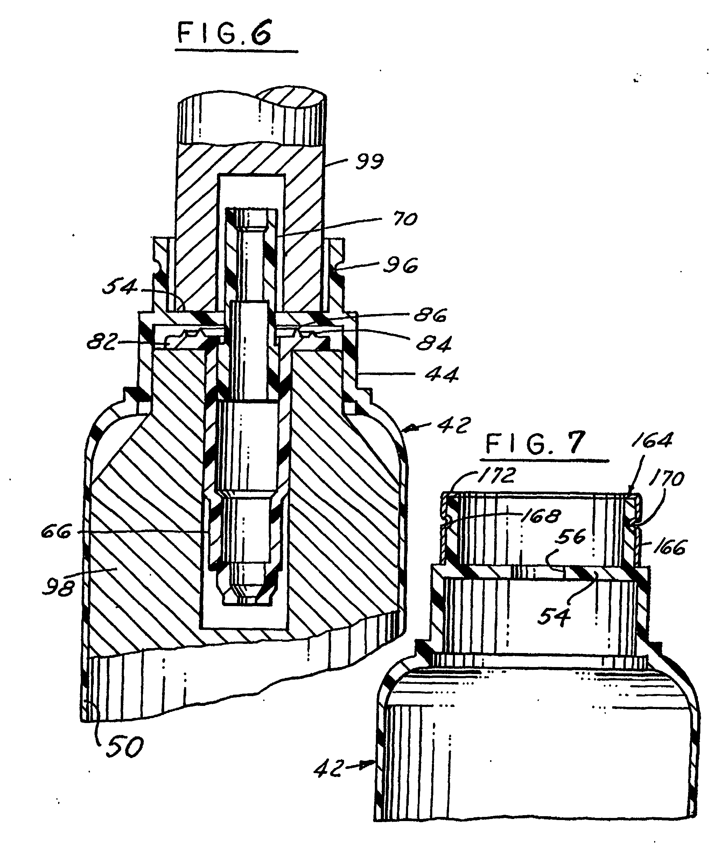

Referring to FIGS. 2 and 5, the pump dispenser 46 consists of a pump body 66, a piston 68 and the stem 70 movable with the piston 68. A ball 72 is provided at the upper end of stem 70 and has limited axial movement. Similarly a ball 73 is provided at the lower end of the pump body 66 and has limited movement. The pump dispenser further includes an actuator 74 having passages 76, 78 through which the contents are dispensed when the actuator is moved downwardly against the action of the spring 80. Such a construction is old and well known.

In accordance with the invention, the body 66 of the pump dispenser 46 is provided with an integral flange 82 (FIG. 5) that is bonded to the underside of the transverse wall 54 by welding, as by ultrasonic welding. The upper surface of the flange 82 is provided with annular V-shaped ribs 84, 86 that are concentric with one another, rib 86 having a greater axial height than rib 84 such that when the sonic welding occurs the ribs will fuse to the underside of the transverse wall 54 of the tube thereby accommodating any variations in the under surface of the wall 54 (FIG. 2). Preferably, the rib 86 is spaced inwardly of the rib 84.

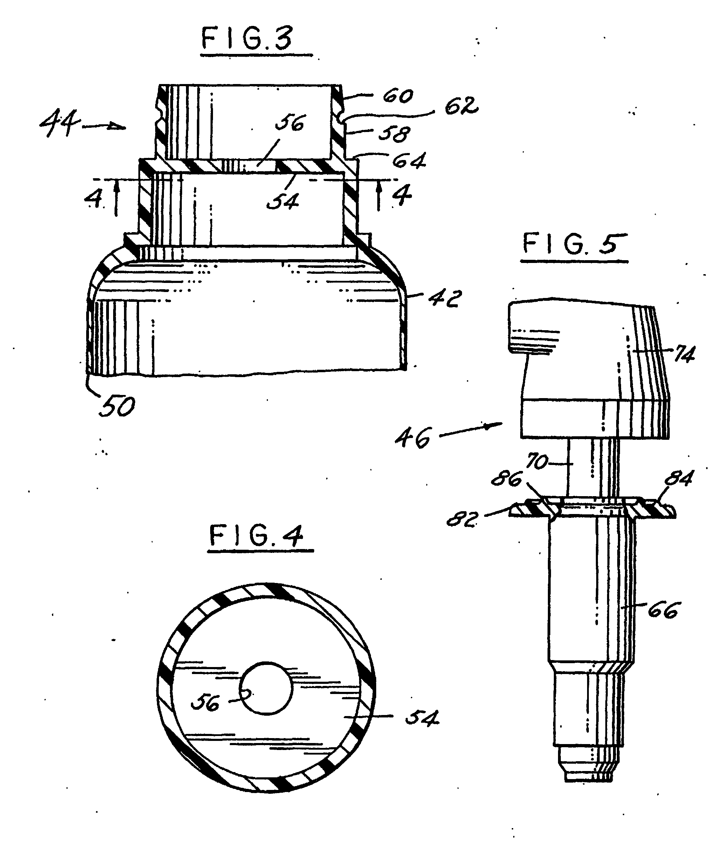

Referring to FIG. 7, a decorative metal band 164 is applied to the finish of the tube 42, shown in FIGS. 1-5. Band 164 includes an axial cylindrical wall 166 which has a portion that is complementary to wall 58. The band 164 includes a bead 168 that extends inwardly into groove 62 and an external groove 170. 'The band 164 includes an integral radial flange 172 which engages the top surface of the finish.

In the making of the package, the pump dispenser 46 is inserted through the open lower end of the tube 42 prior to the closing and filling of the tube, and the flange 82 is sonic welded to the wall 54 by engagement of a mandrel 98 with the flange 54 and a complementary mandrel 99 with the top surface of the wall 54 as shown schematically in FIG. 6. The tube 42 is then filled with product and sealed as at 43 (Fig. 1). The package further includes an overcap 90 that has a base wall 92 and a peripheral skirt 94 with an inner annular rib 96 engaging the annular groove 62. The lower edge of skirt 94 engages the shoulder 64.

## Claims

1. A dispensing device for lotions and the like, comprising
a container having a first and a second end,
said container including a rigid finish (44) at the first end provided with a radial wall (54) and an opening (56) in it, and a side wall (50) integrally connected to said finish and extending to said second end,
a pump dispenser (46) having an axial body (66), a plunger (68) and a stem (70) extending through said opening (56),
said axial body (66) of said pump dispenser (46) having a flange (82) engaging said finish (44),
means for holding said flange (82) of said axial body (66) in position engaging a radial surface of said finish (44),
**characterized in that**,
said side wall (50) of said container is a single side wall (50) of sufficiently thin thickness to form a flexible tube (42), and **in that**
said flange (82) of said pump dispenser (46) is provided with integral projection means on an axially facing surface of said flange (82) that is fused by welding to said radial surface which belongs to said radial wall (54) of said finish (44).

2. A dispensing device for lotions and the like, comprising a container having a first and a second end,
said container including a rigid finish (44) at the first end provided with a radial wall (54) and an opening (56) in it, and a flexible tube (42) integrally connected to said finish (44) and extending to said second end,
a pump dispenser (46) having an axial body (66), a plunger (68) and a stem (70) extending through said opening (56),
said axial body (66) of said pump dispenser (46) having a flange (82) engaging said finish (44),
means for holding said flange (82) of said axial body (66) in position engaging a radial surface of said finish (44),
**characterized in that**,
said container is single walled,
and **in that**
said flange (82) of said pump dispenser (46) is provided with integral projection means on an axially facing surface of said flange (82) that is fused by welding to said radial surface which belongs to said radial wall (54) of said finish (44).

3. The dispensing device set forth in claim 1 or 2
wherein said projection means comprises at least one annular rib (84, 86) on the upper surface of said flange (82) and is welded to the undersurface of the radial wall (54) of said finish (44).

4. The dispensing device set forth in claim 3
including a second concentric annular rib wherein one (86) of said annular ribs has a greater axial height than the other (84) before welding.

5. The dispensing device set forth in any of claims 1 to 4
wherein said welding is by sonic welding.

6. The dispensing device set forth in any one
of claims 1 to 5
wherein said finish (44) includes an integral annular wall (58) extending upwardly from said radial wall (54).

7. The dispensing device set forth in claim 6
wherein said integral annular wall (58) includes an annular groove (62) for receiving an annular rib (96) of an overcap (90).

8. The dispensing device set forth in any one of
claims 1 to 7
wherein said flexible tube (42) is made by injection of the finish (44) and extrusion of the side wall (50).

9. The dispensing device set forth in claim 8
wherein said finish (44) has an annular wall (58) which has a free end including an annular external surface (60) tapering upwardly and inwardly.

10. The dispensing device set forth in any one
of claims 1 to 9
wherein said flexible tube (42) is made of linear low density polyethylene.

## Patentansprüche

1. Ausgabevorrichtung für Lotionen und dergleichen, mit
folgenden Merkmalen:
ein Behälter mit einem ersten und einem zweiten Ende weist einen steifen Hals (44) an dem ersten Ende auf, der mit einer radialen Wand (54) und einer Öffnung (56) in dieser vorgesehen ist, sowie eine Seitenwand (50), die integral mit dem Hals verbunden ist und sich zu dem zweiten Ende hin erstreckt;
eine Pumpausgabevorrichtung (46) weist einen axialen Körper (66), einen Druckkolben (68) sowie einen Schaft (70) auf, der sich durch die Öffnung (56) erstreckt;
der axiale Körper (66) der Pumpausgabevorrichtung (46) weist einen Flansch (82) auf, der an dem Hals (44) anliegt;
Mittel zum Halten des Flansches (82) des axialen Körpers (66) in seiner Stellung in Anlage an einer radialen Oberfläche des Halses (44) ;
**dadurch gekennzeichnet,**
**dass** die Seitenwand (50) des Behälters eine einzelne Wand (50) ausreichend dünner Stärke ist, um eine flexible Röhre (42) zu bilden; und
**dass** der Flansch (82) der Pumpausgabevorrichtung (46) an einer in Achsrichtung blickender Oberfläche des Flansches (82) mit integralen, vorspringenden Mitteln versehen ist, welche durch Schweißen mit der zu der radialen Wand (54) des Halses (44) gehörenden radialen Oberfläche verschmolzen worden ist.

2. Ausgabevorrichtung für Lotionen und dergleichen, mit folgenden Merkmalen:
ein Behälter mit einem ersten und einem zweiten Ende weist einen steifen Hals (44) an dem ersten Ende auf, der mit einer radialen Wand (54) und einer Öffnung (56) in dieser vorgesehen ist, sowie eine flexible Röhre (42), die integral mit dem Hals (44) verbunden ist und sich zu dem zweiten Ende hin erstreckt;
eine Pumpausgabevorrichtung (46) weist einen axialen Körper (66), einen Druckkolben (68) sowie einen Schaft (70) auf, der sich durch die Öffnung (56) erstreckt;
der axiale Körper (66) der Pumpausgabevorrichtung (46) weist einen Flansch (82) auf, der an dem Hals (44) anliegt;
Mittel zum Halten des Flansches (82) des axialen Körpers (66) in seiner Stellung in Anlage an einer radialen Oberfläche des Halses (44);
**dadurch gekennzeichnet,**
**dass** der Behälter einwandig ist, und
**dass** der Flansch (82) der Pumpausgabevorrichtung (46) an einer in Achsrichtung blickenden Oberfläche des Flansches (82) mit integralen, vorspringenden Mitteln versehen ist, welche durch Schweißen mit der zu der radialen Wand (54) des Halses (44) gehörenden radialen Oberfläche verschmolzen worden ist.

3. Ausgabevorrichtung nach Anspruch 1 oder 2,
**dadurch gekennzeichnet, dass** die vorspringenden Mittel mindestens eine ringförmige Rippe (84, 86) auf der Oberseite des Flansches (82) umfassen und an die Unterseite der radialen Wand (54) des Halses (44) geschweißt sind.

4. Ausgabevorrichtung nach Anspruch 3,
**dadurch gekennzeichnet, dass** sie eine zweite konzentrische ringförmige Rippe aufweist, wobei eine (86) der ringförmigen Rippen vor dem Schweißen eine größere axiale Höhe als die andere (84) aufweist.

5. Ausgabevorrichtung nach einem der Ansprüche 1 bis 4,
**dadurch gekennzeichnet, dass** das Schweißen durch Ultraschallschweißen erfolgt.

6. Ausgabevorrichtung nach einem der Ansprüche 1 bis 5,
**dadurch gekennzeichnet, dass** der Hals (44) eine integrale, ringförmige Wand (58) umfasst, die sich von der radialen Wand (54) aus nach oben erstreckt.

7. Ausgabevorrichtung nach Anspruch 6,
**dadurch gekennzeichnet, dass** die integrale, ringförmige Wand (58) eine ringförmige Nut (62) zur Aufnahme einer ringförmigen Rippe (96) einer Deckelkappe (90) umfasst.

8. Ausgabevorrichtung nach einem der Ansprüche 1 bis 7,
**dadurch gekennzeichnet, dass** die flexible Röhre (42) durch Spritzguss des Halses (44) und Strangpressen der Seitenwand (50) hergestellt ist.

9. Ausgabevorrichtung nach Anspruch 8,
**dadurch gekennzeichnet, dass** der Hals (44) eine ringförmige Wand (58) aufweist, welche ein freies Ende mit einer ringförmigen Außenseite (60) aufweist, die sich nach oben und innen verjüngt.

10. Ausgabevorrichtung nach einem der Ansprüche 1 bis 9,
**dadurch gekennzeichnet, dass** die flexible Röhre (42) aus linearem Polyethylen niedriger Dichte hergestellt ist.

## Revendications

1. Dispositif distributeur pour lotions et substances similaires, comprenant
un récipient ayant une première et une deuxième extrémité,
ledit récipient comprenant une bague rigide (44) à la première extrémité munie d'une paroi radiale (54) et d'une ouverture (56), et une paroi latérale (50) connectée d'un seul tenant à ladite bague et s'étendant jusqu'à ladite deuxième extrémité,
un distributeur à pompe (46) ayant un corps axial (66), un piston (68) et une tige (70) s'étendant par ladite ouverture (56),
ledit corps axial (66) dudit distributeur à pompe (46) comportant une bride (82) qui se met en prise avec ladite bague (44),
un moyen pour tenir ladite bride (82) dudit corps axial (66) en position se mettant en prise avec une surface radiale de ladite bague (44),
**caractérisé en ce que**
ladite paroi latérale (50) dudit récipient est une paroi latérale simple (50) d'épaisseur suffisamment mince pour former un tube souple (42), et **en ce que**
ladite bride (82) dudit distributeur à pompe (46) est munie d'un moyen formant saillie intégrée sur une surface faisant face axialement de ladite bride (82) qui est soudé par soudage à ladite surface radiale qui appartient à ladite paroi radiale (54) de ladite bague (44).

2. Dispositif distributeur pour lotions et substances similaires, comprenant
un récipient ayant une première et une deuxième extrémité,
ledit récipient comprenant une bague rigide (44) à la première extrémité munie d'une paroi radiale (54) et d'une ouverture (56), et un tube souple (42) connecté d'un seul tenant à ladite bague (44) et s'étendant jusqu'à ladite deuxième extrémité,
un distributeur à pompe (46) ayant un corps axial (66), un piston (68) et une tige (70) s'étendant par ladite ouverture (56),
ledit corps axial (66) dudit distributeur à pompe (46) comportant une bride (82) qui se met en prise avec ladite bague (44),
un moyen pour tenir ladite bride (82) dudit corps axial (66) en position se mettant en prise avec une surface radiale de ladite bague (44),
**caractérisé en ce que**
ladite paroi latérale est à paroi simple, et **en ce que**
ladite bride (82) dudit distributeur à pompe (46) est munie d'un moyen formant saillie intégrée sur une surface faisant face axialement de ladite bride (82) qui est soudé par soudage à ladite surface radiale qui appartient à ladite paroi radiale (54) de ladite bague (44).

3. Dispositif distributeur selon la revendication 1 ou 2, dans lequel ledit moyen formant saillie comprend au moins une nervure annulaire (84, 86) sur la surface supérieure de ladite bride (82) et est soudé à la surface inférieure de la paroi radiale (54) de ladite bague (44).

4. Dispositif distributeur selon la revendication 3, comprenant une deuxième nervure annulaire concentrique, l'une (86) desdites nervures annulaires ayant une hauteur axiale supérieure à celle de l'autre (84) avant le soudage.

5. Dispositif distributeur selon l'une quelconque des revendications 1 à 4, dans lequel ledit soudage est du soudage par ultrasons.

6. Dispositif distributeur selon l'une quelconque des revendications 1 à 5, dans lequel ladite bague (44) comprend une paroi annulaire intégrée (58) s'étendant vers le haut depuis ladite paroi radiale (54).

7. Dispositif distributeur selon la revendication 6, dans lequel ladite paroi annulaire intégrée (58) comprend une gorge annulaire (62) destinée à recevoir une nervure annulaire (96) d'un bouchon supérieur (90).

8. Dispositif distributeur selon l'une quelconque des revendications 1 à 7, dans lequel ledit tube souple (42) est réalisé par injection de la bague (44) et extrusion de la paroi latérale (50).

9. Dispositif distributeur selon la revendications 8, dans lequel ladite bague (44) comporte une paroi annulaire (58) qui a une extrémité libre comportant une surface annulaire externe (60) se rétrécissant vers le haut et vers l'intérieur.

10. Dispositif distributeur selon l'une quelconque des revendications 1 à 9, dans lequel ledit tube souple (42) est en polyéthylène linéaire basse densité.
